# EUROPEAN PATENT SPECIFICATION

(11) **EP 0 387 013 B1**
(45) Date of publication and mention of the grant of the patent: **15.12.1993**
(21) Application number: 90302395.0
(22) Date of filing: 07.03.1990
(51) Int. Cl.: H04N 7/13, H04N 1/417

(54) **Data encoding**
Datencodierung
Codage de données

(30) Priority: 10.03.1989 GB 8905472
(43) Date of publication of application: 12.09.1990
(73) Proprietor: CROSFIELD ELECTRONICS LIMITED, Hemel Hempstead Hertfordshire HP2 7RH (GB)
(72) Inventor: Kirk, Richard Anthony, Redbourn, Hertfordshire AN3 7NL (GB); Webb, Graham, New Barnet, Hertfordshire EN5 5NR (GB)
(74) Representative: Skone James, Robert Edmund

(56) References cited:
- US-A- 3 524 926
- CONFERENCE RECORD, 1978 INTERNATIONAL CONFERENCE ON COMMUNICATIONS, Toronto, 4th - 7th June 1978, vol. 1, pages 12B.2.1 - 12B.2.6, IEEE, New York, US; P. COHEN et al.: "Dual-mode endocing of NTSC color pictures"

## Description

The invention relates to methods and apparatus for encoding an N dimensional array of data values representing the colour content of pixels of an image.

Modern image processing requires that large quantities of data are handled and stored. Typically, a coloured, graphics image will be defined in terms of pixels having linear densities in the order of 300/inch, each pixel being defined in terms of three or four colour components. Text must be stored at greater resolutions such as 1800/inch. In order to reduce the quantity of data for storage and the like, it is common practice to compress the data by taking advantage of the fact that in real images, significant groups of pixels have the same colour content. Techniques such as run length encoding have been developed which achieve relatively high compression ratios. US-A-3524926 illustrates a technique for adapting image data so as to be suitable for run length encoding or the like by applying a so-called delta encoding technique.

Difficulties can arise, however, when the data is to be reconstituted for the purposes of display or some other form of output. Generally, it is necessary to reconstitute the complete image from its compressed form even though only a portion of that image is to be output. This leads to a lengthy operation since a number of disc accesses will normally be required where the compressed data is stored on disc and a large buffer is needed into which the original image can be reconstituted prior to output.

In accordance with one aspect of the present invention, a method of encoding an N-dimensional array of data values representing the colour content of pixels of an image comprises applying an invertable difference operator to rows of the data in each of the N-dimensions starting from respective first postions in each dimension to generate an N-dimensional array of encoded data characterized by for at least one of the dimensions, generating an additional, redundant data set by applying the same invertable difference operator to a predetermined additional row of data and a row of pixel data to enable the original data values in that dimension to be reconstituted by applying the inverted difference operator to the encoded data starting from a second position different from the corresponding first position.

In accordance with a second aspect of the present invention, apparatus for encoding an N-dimensional array of data values representing the colour content of pixels of an image comprises storage means; and processing means, the processing means being adapted to apply an invertable difference operator to rows of an N-dimensional array of data values in the storage means in each of the N-dimensions starting from respective first positions in each dimension to generate an N-dimensional array of encoded data which is stored in the storage means, characterized by for at least one of the dimensions, generating and storing an additional, redundant data set by applying the same invertable difference operator to a predetermined additional row of data and a row of pixel data to enable the original data values in that dimension to be reconstituted by applying the inverted difference operator to the encoded data in the storage means starting from a second position different from the corresponding first position.

We have realised that by using an invertable difference operator and by generating at least one additional data set, it is possible to reconstitute all or a portion of the original data values starting from more than one position within the encoded data. In this context, an invertable difference operator is an operator which generates a value related to the difference between adjacent data values, it being possible to regenerate the original data values from either of the original data values and the determined difference.

In one example, the additional data set allows the original data values in one dimension to be reconstituted from either of two opposite directions. In another example, the second position is embedded within the array to allow a portion of the original data values to be reconstituted starting from the second position.

The method may be implemented in a variety of ways. For example, it can be assumed that the original array of data values has added to it in each dimension a set of known values (for example 0) which need not be the same in each dimension, the invertable difference operator being applied to the data values defining the image and the additional values. In this way, there is no requirement to store an initial value from which the original data values can be reconstituted by inverting the original operation since those original values are known by default. Alternatively, a set of the original data values themselves could be recorded (compressed or uncompressed) and then used in the initial step of generating the encoded data by applying the invertable difference operator and subsequently when reconstituting the data from each first position.

The number of dimensions N depends on the application although in the case of image data, N will typically be two or three. However, the invention is applicable to any number of dimensions from one.

In the case of a two dimensional image, for example, the invertable difference operator will be applied in sequence to the rows and then the columns (or vice versa) of the array.

Examples of suitable invertable difference operators are arithmetic subtraction (whose inverse is arithmetic summation) and the exclusive OR operation (whose inverse is also the exclusive OR).

The application of the invertable difference operator will normally lead to a large number of values in the encoded data array being the same and this encoded data array can then be further compressed using a conventional technique such as run length encoding and the like.

The storage means could be provided by a single store or a number of separate stores.

An example of a method and apparatus in accordance with the present invention will now be described with reference to the accompanying drawings, in which:-
Figure 1 is a block diagram of the apparatus;
Figures 2-4 illustrate a portion of an image at three stages during application of the technique; and,

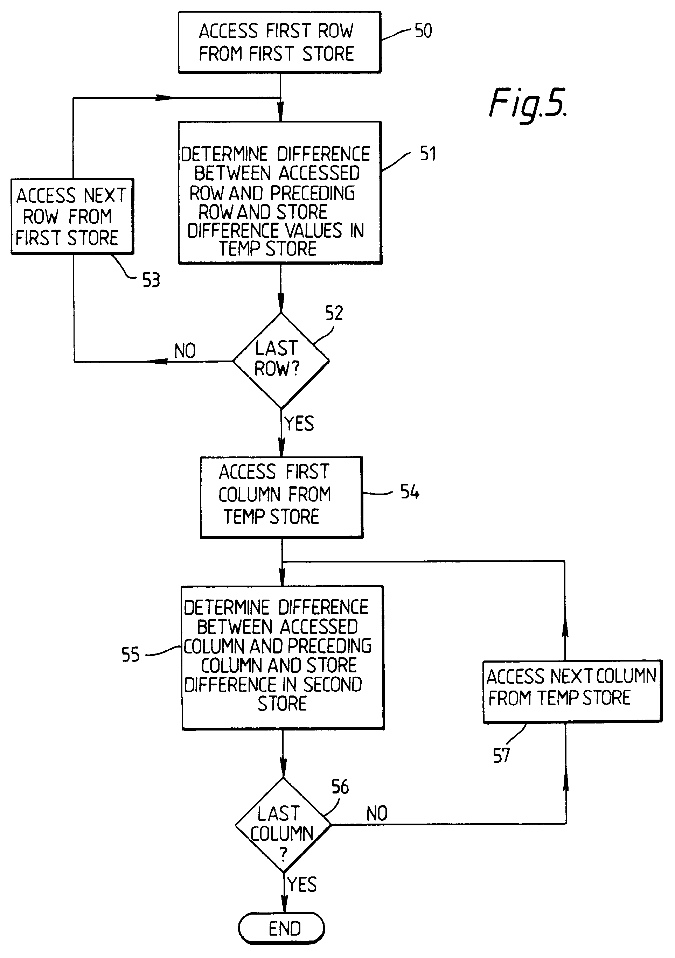

Figure 5 is a flow diagram illustrating operation of the apparatus.

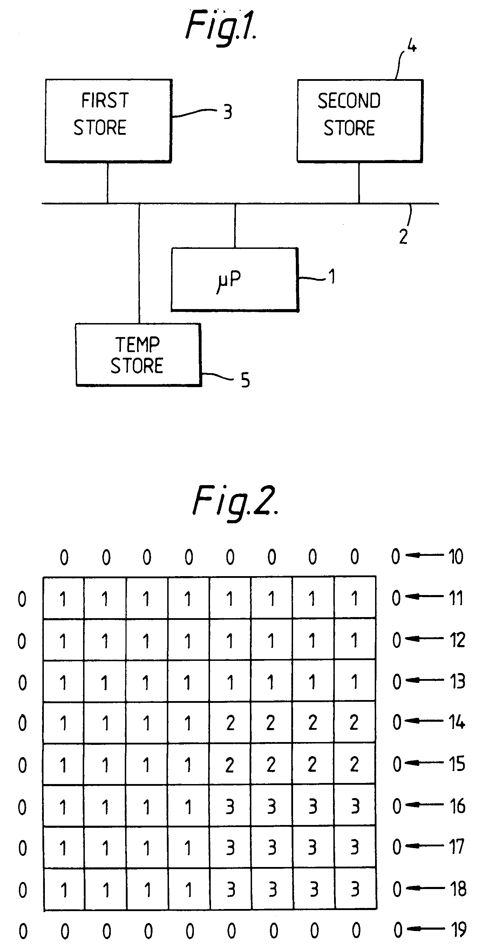

The apparatus which is shown schematically in Figure 1 comprises a microprocessor 1 coupled with a data bus 2. The data bus 2 is connected to a first store 3, a second store 4, and a temporary store 5.

For the purposes of this description, an 8 x 8 array of pixels of an image will be considered. The array in its original form is shown in Figure 2 with the colour content of each pixel being denoted by the value 1, 2, or 3 respectively. In practice, these digital (density) values for a single colour component, will range from 0 to 255. These digital values are initially stored in the first store 3 having been generated in any conventional manner, for example using the Crosfield Magnascan input scanner.

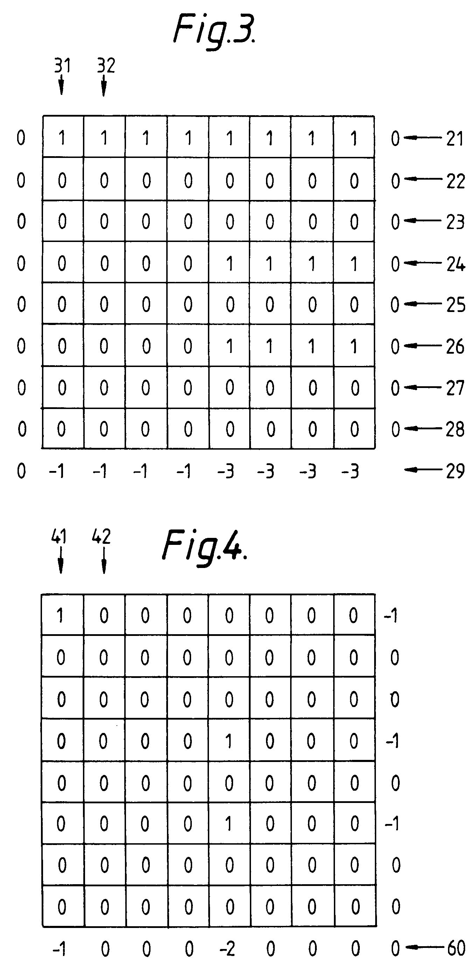

Initially, the microprocessor 1 accesses each row of data values in turn and applies a difference operator which, in this case, is a simple arithmetic subtraction, to determine the difference between each data value and the corresponding data value in the preceding row. In order to code the first and last row and column, the microprocessor 1 behaves as though the image were surrounded by data values of 0, as shown outside the 8 x 8 square of Figure 2. Thus, as an initial step the microprocessor 1 accesses the first row 11 from the first store 3 (step 50) and then determines the difference between the data value of each pixel of the selected row from the data value of the corresponding pixel in the preceding row. In the case of the first row, since all the values are 1 and all the values in the preceding row 10 are 0, the difference value for each pixel will also be 1 as shown in row 21 in Figure 3 (step 51).

The microprocessor 1 then determines whether the last accessed row is the last row in the image (step 52) and, if it is not, accesses the next row, in this case the row 12, from the first store 3 (step 53). Step 51 is then repeated but in this case the difference between pixel values in rows 12 and 11 is determined which, in this case, will be zero as shown in row 22 in Figure 3.

This process is then repeated for all the remaining rows 13-18 in the original image and the appropriate difference values defined in rows 21-28 are stored in the temporary store 5.

For the purposes to be described below, the microprocessor 1 assumes that there is an extra row beyond the end of the row 28 in which each pixel has a known value. In this case, all the pixel values are zero in this extra row 19. The microprocessor 1 then repeats the difference operation on this last row to generate a set of difference values 29 which are also stored in the temporary store 5.

In the next stage, the microprocessor 1 accesses the first column 31 in the temporary store and determines the difference of the pixel values in that column with the adjacent pixel values of the preceding column which as with the previous process when operating on the row 21, is assumed to have known values of, for example 0. This difference is determined for the eight pixels in the column corresponding to real data values and also the ninth pixel in row 29 to generate a set of difference values in a column 41 (Figure 4) which are stored in the second store 4 (steps 54, 55).

The microprocessor then determines whether the last accessed column is the last column of values in the temporary store (step 56) and if it is not, then accesses the next column of values from the temporary store (step 57) and repeats step 55. Thus, in the next operation, the microprocessor will access the column 32 and determine the difference between the pixel values in that column and the preceding column. The result of this differencing operation is shown by the column of values 42 in Figure 4. As can be seen from Figure 4, a significant majority of the final values generated are zero and this enables a significant degree of data compression using, for example, run length encoding, to be achieved.

If the original data values of Figure 2 are to be reconstituted, this can be achieved in one method simply by reversing the differencing operation (ie. a summation operation) starting from the top left-hand corner of the array shown in Figure 4. That is, the reconstitution operation is started from the same, first position as the original differencing operation.

As has been explained previously, in the case of image processing, it is often necessary to be able to look at portions of an image which do not include the section of the image at which the differencing technique was initiated. Thus, for example, it might be desired in the present example to look at the lowermost four rows of the image. In the past, this has required the entire image to be reconstituted from the initial, first position starting at the top left-hand corner. However, as has been described, an additional, redundant row 60 of difference values has been stored in the second store 4. Despite the fact that the differencing technique commenced at the top left-hand corner of the array, this additional row 60 allows the image to be reconstituted backwards starting from the values in the row 60. Thus, initially the columns 31, 32 will be reconstituted starting from the data in the row 60 and the knowledge that this row was created from a set of known data values (all of which were zero). From the partially reconstituted set of values in Figure 3, the original values of Figure 2 can then be reconstituted again by reversing the difference operation.

Another reason for wishing to be able to reconstitute the data in more than one direction is that the data may be stored on a disc store or the like in such a manner that it can be reconstituted more quickly starting from the additional row values 60 than by commencing from the original first position.

In another example (not shown) the additional set of data values may be embedded within the original image. For example, consider the case of a larger image where the lowermost row 18 in Figure 2 is repeated several more times in a downward direction. In this case, the microprocessor can apply the difference operator in the manner described previously between the row 18 shown in Figure 2 and the artificial row 19 as well as between the row 18 and the next real row (not shown). The application of the difference operator to the rows 18, 19 will generate the additional values as shown in row 60 of Figure 4 and this can be used either to reconstitute part of the original image or to check that a reconstitution process is proceeding accurately. This latter feature can be achieved by comparing the values of the row 18 generated during the normal reconstitution from an end row of the image (not shown) with those which are generated by reconstituting from the artificially generated row 19.

## Claims

1. A method of encoding an N-dimensional array of data values representing the colour content of pixels of an image, the method comprising applying an invertable difference operator to rows of the data in each of the N-dimensions starting from respective first postions in each dimension to generate an N-dimensional array of encoded data characterized by for at least one of the dimensions, generating an additional, redundant data set by applying the same invertable difference operator to a predetermined additional row of data and a row of pixel data to enable the original data values in that dimension to be reconstituted by applying the inverted difference operator to the encoded data starting from a second position different from the corresponding first position.

2. A method according to claim 1, wherein the additional, redundant data set allows the original data values in one dimension to be reconstituted from either of two opposite directions.

3. A method according to claim 1 or claim 2, wherein the second position is embedded within the array to allow a portion of the original data values to be reconstituted starting from the second position.

4. A method according to any of the preceding claims, wherein N is 2 or 3.

5. A method according to any of the preceding claims, wherein the invertable difference operator comprises arithmetic subtraction or the exclusive OR operation.

6. Apparatus for encoding an N-dimensional array of data values representing the colour content of pixels of an image, the apparatus comprising storage means (3-5); and processing means (1), the processing means being adapted to apply an invertable difference operator to rows of an N-dimensional array of data values in the storage means in each of the N-dimensions starting from respective first positions in each dimension to generate an N-dimensional array of encoded data which is stored in the storage means, characterized by for at least one of the dimensions, generating and storing an additional, redundant data set by applying the same invertable difference operator to a predetermined additional row of data and a row of pixel data to enable the original data values in that dimension to be reconstituted by applying the inverted difference operator to the encoded data in the storage means starting from a second position different from the corresponding first position.

7. Apparatus according to claim 6, wherein the invertable difference operator comprises arithmetic subtraction or the exclusive OR operation.

8. Apparatus according to claim 6 or claim 7, wherein N is 2 or 3.

## Patentansprüche

1. Verfahren zum Kodieren einer N-dimensionalen Anordnung von Datenwerten, die den Farbgehalt von Bildpixeln repräsentieren, wobei die Datenreihen in jeder der N-Dimensionen beginnend jeweils mit den jeweils ersten Positionen in jeder Dimension mit einem invertierbaren Differenzoperator behandelt werden, um eine N-dimensionale Anordnung von kodierten Daten zu erzeugen, dadurch gekennzeichnet, daß für mindestens eine der Dimensionen ein zusätzlicher, redundanter Datensatz erzeugt wird, indem eine vorbestimmte zusätzliche Datenreihe und eine Reihe von Pixeldaten mit dem gleichen invertierbaren Differenzoperator behandelt werden, so daß die originären Datenwerte in dieser Dimension wieder hergestellt werden können, indem die kodierten Daten beginnend mit einer zweiten, gegenüber der entsprechenden ersten Position unterschiedlichen Position mit dem invertierten Differenzoperator behandelt werden.

2. Verfahren nach Anspruch 1, bei dem mit dem zusätzlichen, redundanten Datensatz die originären Datenwerte in einer Dimension in jeder von zwei entgegengesetzten Richtungen wiederhergestellt werden können.

3. Verfahren nach Anspruch 1 oder 2, bei dem die zweite Position innerhalb der Anordnung liegt, so daß ein Teil der originären Datenwerte beginnend mit der zweiten Position wieder hergestellt werden kann.

4. Verfahren nach einem der vorhergehenden Ansprüche, bei dem N = 2 oder 3.

5. Verfahren nach einem der vorhergehenden Ansprüche, bei dem der invertierbare Differenzoperator eine arithmetische Subtraktion oder exklusive ODER-Operation beinhaltet.

6. Vorrichtung zum Kodieren einer N-dimensionalen Anordnung von Datenwerten, die den Farbgehalt von Bildpixeln repräsentieren, mit Speichermitteln (3 bis 5), und Mitteln (1) zur Datenverarbeitung, mit denen Reihen einer N-dimensionalen Anordnung von Datenwerten in den Speichermitteln in jeder der N-Dimensionen beginnend mit den jeweils ersten Positionen in jeder Dimension mit einem invertierbaren Differenzoperator behandelt werden, um eine N-dimensionale Anordnung von kodierten Daten zu erzeugen, die in den Speichermitteln gespeichert wird, dadurch gekennzeichnet, daß für mindestens eine der Dimensionen ein zusätzlicher, redundanter Datensatz erzeugt und gespeichert wird, indem eine vorbestimmte zusätzliche Datenreihe und eine Reihe von Pixeldaten mit dem gleichen invertierbaren Differenzoperator behandelt werden, so daß die originären Datenwerte in dieser Dimension wieder hergestellt werden können, indem die kodierten Daten in den Speichermitteln beginnend mit einer zweiten, gegenüber der entsprechenden ersten Position unterschiedlichen Position mit dem invertierten Differenzoperator behandelt werden.

7. Vorrichtung nach Anspruch 6, bei der der invertierbare Differenzoperator eine arithmetische Subtraktion oder exklusive ODER-Operation beinhaltet.

8. Vorrichtung nach Anspruch 6 oder 7, bei der N = 2 oder 3.

## Revendications

1. Méthode de codage d'un ensemble N-dimensionnel de valeurs de données représentant la teneur de couleur des pixels d'une image, ladite méthode prévoyant l'application d'un opérateur inversible de différence à des rangées de données en chacune des dimension-N à partir de premières positions relatives en chaque dimension pour générer un ensemble dimensionnel-N de données codées, caractérisée en ce que pour une des dimensions au minimum, la génération d'un jeu supplémentaire redondant de valeurs de données par l'application du même opérateur inversible de différence à une rangée supplémentaire prédéterminée de données et à une rangée de valeurs de données de pixel pour permettre la reconstitution des valeurs de données d'origine en cette dimension par l'application de l'opérateur inversible de différence aux données codées à partir d'une deuxième position différente par rapport à la première position correspondante.

2. Méthode selon la revendication 1, dont les valeurs supplémentaires redondantes permettent de reconstituer les valeurs d'origine de données en une dimension à partir de l'un ou de l'autre de deux sens opposés.

3. Méthode selon la revendication 1 ou la revendication 2, dont la deuxième position est intégrée dans l'ensemble pour permettre à une portion des valeurs de données d'origine d'être reconstituées à partir de la deuxième position.

4. Méthode selon l'une quelconque des revendications précédentes, dont N est 2 ou 3.

5. Méthode selon l'une quelconque des revendications précédentes, dont l'opérateur inversible de différence comporte la soustraction arithmétique ou l'opération exclusive OU.

6. Appareil de codage d'ensemble dimensionnel-N de valeurs de données représentant la teneur en couleur de pixels d'une image, l'appareil comportant des moyens de mise en mémoire (3-5); et des moyens de traitement (1), lesdits moyens de traitement étant conçus pour appliquer un opérateur inversible de différence à des rangées d'un ensemble dimensionnel-N de valeurs de données dans les moyens de mise en mémoire de chacune des dimensions-N à partir de la première position respective en chaque dimension pour générer un ensemble dimensionnel-N de données codées qui est intégré aux moyens de mise en mémoire, caractérisé en ce que pour une des dimensions au minimum assurant la génération et la mise en mémoire d'un jeu supplémentaire redondant par l'application du même opérateur inversible de différence à une rangée prédéterminée de données et à une rangée de données de pixel pour permettre aux valeurs d'origine des données de ladite dimension d'être reconstituées en appliquant l'opérateur inversible de différence aux données codées dans le moyen de mise en mémoire à partir d'une deuxième position différente par rapport à la première position correspondante.

7. Appareil selon la revendication 6, dont l'opérateur inversible de différence comporte la soustraction arithmétique ou l'opération exclusive OU.

8. Appareil selon la revendication 6 ou la revendication 7, dont N est égal à 2 ou 3.
